# EUROPÄISCHE PATENTSCHRIFT

(11) **EP 1 965 907 B1**
(45) Veröffentlichungstag und Bekanntmachung des Hinweises auf die Patenterteilung: **30.03.2011**
(21) Anmeldenummer: 06754648.1
(22) Anmeldetag: 01.07.2006
(51) Int. Cl.: B01J 20/18, B01J 20/32, C01B 37/00, C04B 35/00, C23C 18/12, F28D 20/00, F28F 13/18

(54) **SCHICHTVERBUND UND SEINE HERSTELLUNG**
COMPOSITE LAYER AND PRODUCTION THEREOF
COMPOSITE STRATIFIE ET SA PRODUCTION

(30) Priorität: 10.08.2005 DE 102005038044
(43) Veröffentlichungstag der Anmeldung: 10.09.2008
(73) Patentinhaber: SorTech AG, 06120 Halle (DE)
(72) Erfinder: WOLF, Markus, 79111 Freiburg (DE); JÄSCHKE, Stefan, FL-9494 Schaan (LI)
(74) Vertreter: Dr. Weitzel & Partner
(86) Internationale Anmeldenummer: PCT/EP2006/006417
(87) Internationale Veröffentlichungsnummer: WO 2007/017015

(56) Entgegenhaltungen:
- US-A- 5 260 243
- US-A1- 2003 091 872
- US-A1- 2004 028 809
- COOPER EMILY R ; ANDREWS CHRISTOPHER D ; WHEATLEY PAUL S ; WEBB PAUL B ; WORMALD PHILIP ; MORRIS RUSSELL E: "Ionic liquids and eutectic mixtures as solvent and template in synthesis of zeolite analogues" NATURE, Bd. 430, 28. August 2004 (2004-08-28), Seiten 1012-1016, XP002465514
- L. BONACCORSI, E. PROVERBIO: "Synthesis of thick zeolite coatings on stainless steel" MICROPOROUS AND MESOPOROUS MATERIALS, Bd. 74, 20. August 2004 (2004-08-20), Seiten 221-229, XP002465515

## Beschreibung

Die vorliegende Erfindung betrifft ein Verfahren zur Herstellung eines Schichtverbundes, umfassend eine metallische Trägerschicht und eine Silikatschicht sowie die Verwendung solcher Schichtverbunde in der Wärmepumpentechnik.

Silikate sind die Salze der Orthokieselsäure Si(OH)₄ und deren Kondensationsprodukte. Sie zeichnen sich nicht nur dadurch aus, dass sie die artenreichste Klasse der Mineralien bilden, sondern auch dadurch, dass sie technisch von großer Bedeutung sind. Neben Glas, Porzellan, Email, Tonwaren sind Zement und Wasserglas technisch wichtige, aus Silkaten bestehende Produkte.

Silikate können hinsichtlich ihres strukturellen Aufbaus eingeteilt werden in a) Silikate mit diskreten Anionen, wie den Nesosilikate (Inselsilikate, Orthosilicate mit dem Anion [SiO₄]⁴⁻), Sorosilicate (Gruppensilicate, hier sind die [SiO₄]-Tetraeder zu einer endlichen Gruppe verknüpft), Cyclosilicate (Ringsilicate, hier sind die [SiO₄]-Tetraeder zu Ringen angeordnet), b) Inosilicate (Kettensilicate u. Bandsilicate, hier sind die [SiO₄]-Tetraeder zu Ketten zusammengelagert, das heißt zu eindimensional unbegrenzten Gebilden, die als Polymere des Anions [SiO₃]²⁻ anzusehen sind), c) Phyllosilicate (Blattsilicate und Schichtsilicate, hier sind die [SiO₄]-Tetraeder jeweils in einer Ebene miteinander verkettet; sie bilden also Schichtengitter und können als Polymere des Anions [Si₄O₁₀]⁴⁻ betrachtet werden) und d) Tectosilicate (Gerüstsilicate, hier setzt sich die Verkettung der [SiO₄]-Tetraeder in allen drei Raumrichtungen fort, so dass dreidimensionale Netzwerke gebildet werden). Zu den Tectosilikaten zählen insbesondere die Zeolithe und die Feldspäte, die zu den technisch wichtigsten Silikat Mineralien zu zählen sind.

Zeolithe sind Silikat-Mineralien und insbesondere Aluminosilikate mit einer chemisch komplexen Struktur, welche durch die Ausbildung poröser Tetraedernetzwerke charakterisiert ist. Nach der allgemeinen Definition der IZA (International Zeolithe Association) werden unter Zeolithe solche Mineralien verstanden, welche Tetraedernetzwerke mit einer Netzwerkdichte von mehr als 19 Tedraeder-Atomen pro 1000 Å³ aufweisen. Zeolithe weisen eine Struktur mit inneren Hohlräumen auf, wobei diese Hohlräume moleklare Größendimensionen annehmen. Hieraus begründet sich die Eigenschaft von Zeolithen, Fremdatome oder Fremdmoleküle in ihre mikroporöse Struktur aufnehmen zu können, beispielsweise können Zeolithe große Mengen von Wasser speichern und bei Erhitzung wieder freigeben. Zeolith-Materialien in Kontakt mit einem Wärmetauscher sind daher besonders geeignet zum Aufbau eines Latent-Wärmespeichers. Hierzu werden nach dem Stand der Technik entweder Schüttungen von Zeolith-Materialien oder Zeolithe verwendet, welche in offenporige Festkörper, etwa Metallschwämmen, die in thermischem Kontakt mit einem Wärmetauscher stehen, eingebracht sind. Für letzteres wird beispielsweise auf die DE 101 59 652 C2 verwiesen. Ein Herstellungsverfahren für ZeoCithe, das ionische Flüssigkeiten als Template verwendet, geth aus dem Fachartikel "Yonic liquids and entectic mixtures as solvent and template in synthesis of zeolite analogus" NATURE, bd, 430.28.08.2004, Seiten 1012-1016 hervor.

Für Anwendungen, bei denen den Zeolithen Wärme zugeführt wird beziehungsweise bei denen vom Zeolith-Material Wärme abgezogen werden soll, sind lose Zeolith-Schüttungen deshalb ungeeignet, weil ein hinreichender thermischer Kontakt zu angrenzenden Wärmetauscherstrukturen nur unzureichend bewerkstelligt werden kann. Außerdem muss insbesondere für Latentwärmespeicher das üblicherweise als Sorptiv bezeichnete Arbeitsmedium dem Zeolith als Sorbens-Material in effektiver Art und Weise zugeführt werden. Dies setzt makroskopische Kanalstrukturen im Sorbens-Material voraus. Aus diesem Grund wird für solche Anwendungszwecke das als Pulver synthetisierte Zeolith zu größeren Einheiten in Form von Pellets mit Hilfe eines Binders verpresst. Nachteilig ist jedoch, dass durch die meisten Bindemittel die anwendungsrelevanten Eigenschaften der Zeolithe beeinflusst und meist nachteilig verändert werden. Außerdem kann bei der Verwendung von Pellets noch kein hinreichender thermischer Kontakt zu angrenzenden Wärmetauschern sichergestellt werden. Aus diesem Grund werden Systeme aus Wärmetauschern vorgeschlagen, auf die eine Zeolith-Schicht aufgebracht wird. Typisch für die bekannten Beschichtungsverfahren von Substraten mit Zeolithen ist ein vorangehender Syntheseschritt, bei dem zunächst das Zeolith-Material hergestellt wird. Dieses Zeolith-Material kann mechanisch nachbehandelt werden, etwa durch Zerkleinerungs- oder Mahlschritte, so dass ein pulverförmiges Zeolith entsteht. Nachfolgend wird das so vorsynthetisierte Zeolith-Material mit einem Binder vermischt und auf das Trägersubstrat aufgebracht.

Nachteilig an einer solchen Vorgehensweise ist jedoch, dass insbesondere bei komplexen, dreidimensionalen Wärmetauscherstrukturen das Aufbringen von gleichmäßig dicken Zeolith-Schichten auf der gesamten Oberfläche des Wärmetauschers schwierig ist. Außerdem weist ein solches postsynthetisches Beschichtungsverfahren eine Vielzahl von Herstellungsschritten auf. Ferner verändern die meisten Binder die Eigenschaften der Zeolithe, da für die zubindenden Moleküle kein ungehinderter Zugang zur mikroporösen Innenstruktur der Zeolith-Partikel vorliegt.

In der Literatur sind eine Vielzahl an Vorschlägen zur direkten Synthese von Silikaten auf substraten gemacht worden. Vorrangig sind hier die Synthese nach einem Sol-Gel-Verfahren oder die Hydrothermalsynthese zu nennen. Dabei ist unter einer Hydothermalsynthese allgemein die Synthese von Mineralien und chemischen Verbindungen durch Kristallisation aus hocherhitzten wässrigen Lösungen - hydrothermale Lösungen mit einer Temperatur von mehr als 100 °C und einem Druck von mehr als 1 bar - zu verstehen. Die Hydothermalsynthese wird meist in Druckgefäßen ausgeführt, da die angewendeten Temperaturen weit über dem Siedepunkt des Wassers, meist sogar über dessen kritische Temperatur T_{K} = 374 °C liegen. Im überkritischen Zustand löst Wasser manche normalerweise wasserunlöslichen Stoffe. Das verstärkte Lösevermögen resultiert dabei höchst wahrscheinlich aus der Kompression, die bei geringerem Abstand eine verstärkte Wechselwirkung mit dem gelösten Stoff bewirkt. Mit der Hydrothermalsynthese besteht damit grundsätzlich die Möglichkeit zur Herstellung von mesoskopischen anorganischen Kolloiden, Kristallen oder Pulvern in wässrigen Systemen. Diese Synthese führt großtechnisch in der Regel zu Partikel mit einem Partikeldurchmesser von einigen wenigen µm Durchmesser. Neben diesen schon seit längerer Zeit bekannten Verfahren ist in jüngerer Zeit auch ein Spin-coating-Verfahren zu Herstellung von Silikatschichten bekannt geworden. So wird mit der WO 02/ 032 589 A1 die Herstellung von porösen Schichten, poröse Schichten selbst und die Verwendung dieser Schichten in der Mikroelektronik beschrieben. Die Schichten können aus periodischen porösen Partikeln aus einem Zeolith bestehen, wobei die Partikel einen Teilchendurchmesser im Nanometerbereich und die Schichten selbst eine Dicke von 30 bis 1000 nm aufweisen. Die beschriebenen Schichten werden dabei auf eine Siliziumoberfläche aufgebracht.

Ein Hauptproblem bei der direkten Hydrothermalsynthese von Silikaten besteht in der Keimbildung, welche die Morphologie und die Größenverteilung der entstehenden Partikel bestimmt. Die Bildung der Keime und allgemein jeder Kristalle oder Partikel stellt dabei in einer thermodynamischen Betrachtungsweise eine Phasenbildung dar und unterliegt somit auch deren Gesetzmäßigkeiten. Da Partikel aus einer Vielzahl von Teilchen gebildet werden, ist es aufgrund der Entropieabnahme sehr unwahrscheinlich, dass eine spontane Partikelbildung stattfindet. Somit erfordert eine Fällung bzw. Partikel-, Pulver- oder Kristallbildung immer eine Induktionsphase, in der primäre Keimkristalle gebildet werden. Findet in der Induktionsphase eine langsame Keimbildung statt, so hat dies zur Folge, dass in der Regel Partikel mit einer relativ breiten Größenverteilung und einer energetisch minimierten Partikeloberfläche gebildet werden. Erfolgt dagegen eine schnelle Keimbildung, so führt diese zu homogenem Wachstum, relativ kleiner Partikel und einer engen Größenverteilung.

Für die Abscheidung von dichten Silikatschichten auf einem metallischen Substrat in einer hyrothermalen Synthese sind die Prozesse der Keimbildung in Lösung und/oder auf dem Substrat, des Transportes der Keime auf die Oberfläche und deren möglichst homogenes, laterales Wachstum auf der Substratoberfläche, notwendige Bedingungen.

Eine Aufgabe der vorliegenden Erfindung besteht daher darin, ein Verfahren bereitzustellen, mit dem eine gleichmäßige und homogene Beschichtung eines metallischen Trägers mit Silikaten ermöglicht wird, die in direkter weise durchgeführt wird

Gelöst werden diese Aufgaben durch ein Verfahren zur Herstellung eines Schichtverbundes umfassend ein metallisches Trägersubstrat und eine Silikatschicht mit den Verfahrensschritten a) Bereitstellen des metallischen Trägersubstrates, b) Herstellen von Silikatkristallen und/ oder Silikatpartikel mittels solvothermaler Synthese in mindestens einer ionischen Flüssigkeit und c) Beschichten mindestens einer Oberfläche des metallischen Trägersubstrates mit den unter b) hergestellten Silikatkristallen und/oder Silikatpartikel, wobei die Verfahrensschritte b) und c) gleichzeitig vorgenommen werden.

Dabei sind hier und im Folgenden unter einer solvothermalen Synthese eine zu einer hydothermale Synthese analogen Synthese in einem von Wasser verschiedenem Solvens zu verstehen, wobei die Temperatur und die Drücke dem jeweiligen Solvens angepasst werden. Unter einer Schicht ist im Kontext dieser Schrift eine durchgehende Substanzschicht zu verstehen, die bis auf eventuelle Fehlstellen flächendeckend ist. Des Weiteren ist unter einer ionischen Flüssigkeit ein Salz zu verstehen, das bei Raumtemperatur flüssig ist und, das aus einem komplexen anorganischen Kation oder einem Stickstoff, Sauerstoff, Schwefel, Phosphor oder anderen Homologen als Heteroatom enthaltenden organischen Kation und anorganischen oder organischen Anionen aufgebaut ist. Sowohl Kation als auch Anion können durch geeignete Derivatisierung so aufgebaut werden, dass sie räumlich anspruchsvoll sind und den Existenzbereich der Flüssigkeit erweitert. Diese ionischen Flüssigkeiten zeichnen sich gleichwohl, dass es sich um Salze handelt, durch sehr niedrige Schmelzpunkte aus. Darüber hinaus weisen ionische Flüssigkeiten breite thermische Flüssigkeitsbereiche auf, zeigen eine hohe thermische Stabilität und sind hydrolysestabil. Aufgrund ihrer physikochemischen Eigenschaften als geschmolzene Salze, d.h. weil Kationen und Anionen ohne Solvathüllen frei gegeneinander beweglich sind, haben ionische Flüssigkeiten im thermischen Stabilitätsbereich in der Regel keinen Eigendampfdruck. Ob in seltenen Fällen lonenpaare oder gar einzelne Ionen durch thermische Anregung aus der Flüssigkeit in die Gasphase verdampft werden können, ist zur Zeit noch nicht zweifelsfrei geklärt. Eine Zusammenfassung zu der Art und den Eigenschaften der Ionische Flüssigkeiten sind in P. Wasserscheid, T. Welton ,,lonic Liquids in Synthesis" Wiley VCH 2003 gegeben.

Überraschender Weise hat sich gezeigt, dass sich durch die Verwendung von mindestens einer ionischen Flüssigkeit als Solvens in der solvothermalen Synthese von Silikaten eine im Vergleich zu der bekannten hydrothermalen Synthese 1000-fach schnellere Keimbildung einstellt. Damit sind bei der Verwendung einer ionischen Flüssigkeit als Solvens in der Synthese von Silikatkristallen und*l* oder Silikatpartikel deutlich kürzere Synthesezeiten möglich, die etwa der Hälfte der Synthesezeit in Wasser entsprechen. Zudem wird durch die Verwendung von mindestens einer ionischen Flüssigkeit als Solvens eine im Vergleich zu der bekannten hydrothermalen Synthese hinsichtlich der Sicherheitstechnik aufwendiger Apparateaufbau nicht benötigt. Durch die niedrigeren Gesamtdrücke ist eine für hohe Drücke notwendige Sicherheitstechnik nicht erforderlich. Es hat sich weiterhin als überraschenden Effekt herausgestellt, dass die Synthese von unerwünschten Spezies, wie dies in einer wässrigen Umgebung oder mit Wasser als Solvens der Fall ist, weitgehend unterdrückt werden kann. Ein weiterer Vorteil bei der Verwendung der ionischen Flüssigkeiten als Solvenz in der solvothermalen Synthese von Silikaten besteht darin, das durch die Wahl der Anionen und der Kationen der ionischen Flüssigkeiten Lösungseigenschaften erreicht werden, die in der hydrothermalen Synthese nur durch die Kombination von Wasser als Lösungsmittel und gelösten Neutralmolekülen oder Elektrolyten erreicht werden.

Gemäß einem zweiten bevorzugten Verfahren wird die Synthese der Silikatkristalle und/ oder Silikatpartikel in einem Gemisch aus mindestens zwei verschiedenen ionischen Flüssigkeiten durchgeführt.

Die in einem erfindungsgemäßen Verfahren eingesetzte ionische Flüssigkeit oder das Gemisch aus mindestens zwei ionischen Flüssigkeiten umfasst dabei vorzugsweise mindestens ein Salz, aufweisend ein hydrophiles oder hydrophobes Anion X, insbesondere ein hydrophiles oder hydrophobes ein-, zwei- oder dreiwertiges Anion X^{m-} mit m = 1, 2 oder 3, und als Kation ein fünf- oder sechsgliedriges, aromatisches, teilgesättigtes oder ungesättigtes, stickstoffhaltiges Heterocyclen-Kation, ein Ammonium-Kation oder ein Guanidinium-Kation. Insbesondere kann das Salz ein Pyrrolium-Salz [Formel (I), Imidazolium-Salz [Formel (II)], Imidazolidinium-Salz [Formel (III), Pyridinium-Salz [Formel (IV)], Ammonium-Salz [Formel (V)] oder ein Guanidinium-Salz [Formel (VI)] mit den nachfolgenden Strukturen sein: 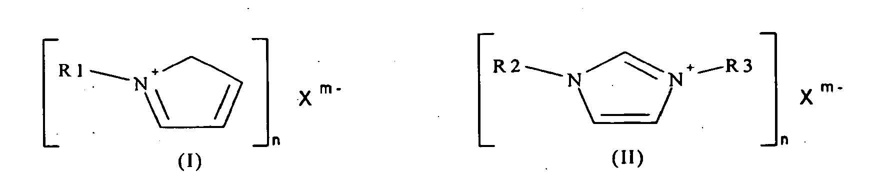 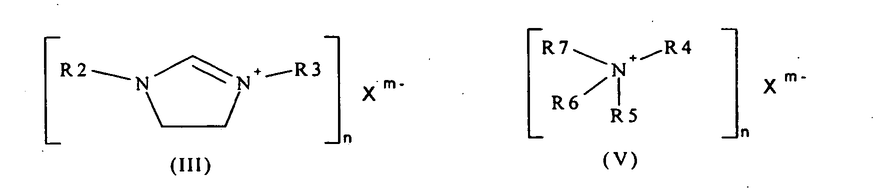 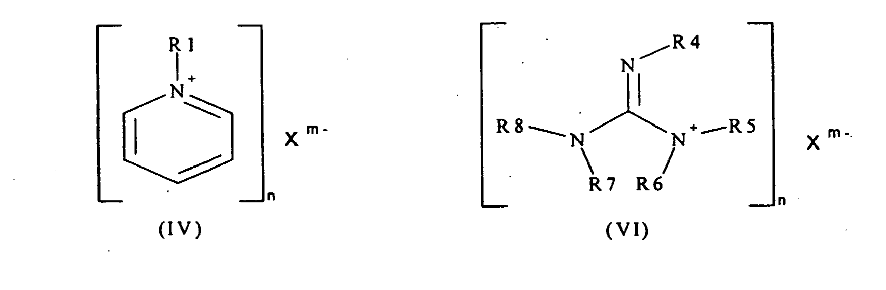
wobei X^{m-} ein ein-, zwei- oder dreiwertiges Anion mit m = 1, 2 oder 3 ist,
wobei n die Anzahl der einwertigen Kationen in dem Salz bedeutet und den Wert n= 1, 2 oder 3 aufweist und n der Wertigkeit des Anions entspricht,
wobei R1 eine Alkyl-, Alken- oder Aryl-Gruppe sein kann,
wobei R2 und R3 gleich oder unterschiedlich Wasserstoff, eine Alkyl-, Alken- oder Aryl-Gruppe sein kann, mit der Maßgabe, dass R2 und R3 gleiche oder unterschiedliche Bedeutungen besitzen können, und mindestens ein Rest R2 oder R3 eine Alkyl-, Alken- oder Aryl-Gruppe ist,
wobei R4, R5, R6,R7 und R8 gleich oder unterschiedlich Wasserstoff, eine Alkyl-, Alken- oder Aryl-Gruppe sein kann mit der Maßgabe, das mindestens ein Rest R4, R5, R6, R7 oder R8 eine Alkyl-, Alken- oder Aryl-Gruppe ist und dass R4, R5, R6, R7 und R8 gleiche oder unterschiedliche Bedeutungen besitzen können.

Insbesondere umfasst die ionische Flüssigkeit oder das Gemisch aus mindestens zwei ionischen Flüssigkeiten dabei vorzugsweise mindestens ein Salz, aufweisend ein hydrophiles oder hydrophobes Anion X, insbesondere ein ein-, zwei- oder dreiwertiges Anion X ^{m-} mit m = 1, 2 oder3 und als Kation ein fünf- oder sechsgliedriges, aromatisches, teilgesättigtes oder ungesättigtes, stickstoffhaltiges Heterocyclen-Kation, ein Ammonium-Kation oder ein Guanidinium-Kation gemäß einer der Formeln I bis VI
wobei n die Anzahl der einwertigen Kationen in dem Salz bedeutet und den Wert n= 1, 2 oder 3 aufweist und n der Wertigkeit des Anions entspricht,
wobei R1 eine Alkyl-, Alken- oder Aryl-Gruppe sein kann,
wobei R2 und R3 gleich oder unterschiedlich Wasserstoff, eine Alkyl-, Alken- oder Aryl-Gruppe sein kann, mit der Maßgabe, dass R2 und R3 gleiche oder unterschiedliche Bedeutungen besitzen können, und mindestens ein Rest R2 oder R3 eine Alkyl-, Alken- oder Aryl-Gruppe ist,
wobei R4, R5, R6,R7 und R8 gleich oder unterschiedlich Wasserstoff, eine Alkyl-, Alken- oder Aryl-Gruppe sein kann mit der Maßgabe, das mindestens ein Rest R4, R5, R6, R7 oder R8 eine Alkyl-, Alken- oder Aryl-Gruppe ist und dass R4, R5, R6, R7 und R8 gleiche oder unterschiedliche Bedeutungen besitzen können und wobei die Alkyl-Gruppe oder Alken-Gruppe ein linearer, verzweigter, gesättigter und/oder ungesättigter Alkylrest mit einer Kohlenstoffkettenlänge von C-1 bis C-30 bedeutet und weiterhin besonders bevorzugt ein Methyl-, Ethyl-, n-Propyl-, 1-Methylethyl-, n-Butyl-, 1-Methylpropyl-, 2-Methylpropyl-, 1,1-Dimethylethyl-, n-Pentyl-, 1-Methylbutyl-, 2-Methylbutyl-, 3-Methylbutyl-, 1-Ethylpropyl-, 2-Ethylpropyl-, 1,1-Dimethylpropyl-, 1,2-Dimethylpropyl-, 2,2-Dimethylpropyl-, n-Hexyl-, 2-Ethylhexyl-, n-Heptyl-, n-Octyl-, n-Nonyl-, n-Decyl-, n-Undecyl- oder n-Dodecyl-Rest bedeutet.

Die in einem erfindungsgemäßen Verfahren weiterhin bevorzugt eingesetzte ionische Flüssigkeit oder das Gemisch aus mindestens zwei ionischen Flüssigkeiten umfasst dabei mindestens ein Salz, aufweisend ein ein-, zwei oder dreiwertiges Anion X^{m-} mit m = 1, 2 oder 3, und als Kation ein fünf- oder sechsgliedriges, aromatisches, teilgesättigtes oder ungesättigtes, stickstoffhaltiges Heterocyclen-Kation, ein Ammonium-Kation oder ein Guanidinium Kation gemäß einer der Formeln I bis VI,
wobei n die Anzahl der einwertigen Kationen in dem Salz bedeutet und den Wert n= 1, 2 oder 3 aufweist und n der Wertigkeit des Anions entspricht,
wobei R1 eine Alkyl-, Alken- oder Aryl-Gruppe sein kann,
wobei R2 und R3 gleich oder unterschiedlich Wasserstoff, eine Alkyl-, Alken- oder Aryl-Gruppe sein kann, mit der Maßgabe, dass R2 und R3 gleiche oder unterschiedliche Bedeutungen besitzen können, und mindestens ein Rest R2 oder R3 eine Alkyl-, Alken- oder Aryl-Gruppe ist,
wobei R4, R5, R6, R7 und R8 gleich oder unterschiedlich Wasserstoff, eine Alkyl-, Alken- oder Aryl-Gruppe sein kann mit der Maßgabe, das mindestens ein Rest R4, R5, R6, R7 oder R8 eine Alkyl-, Alken- oder Aryl-Gruppe ist und dass R4, R5, R6, R7 und R8 gleiche oder unterschiedliche Bedeutungen besitzen können und
wobei X^{m-} ein Anion aus der Gruppe Tetrafluoroborat (BF₄⁻), Alkyl-Borat insbesondere Tetraalkylborat (B(OR)₄⁻ mit R = Alkyl) ganz besosonders Triethylhexylborat (C₂H₆O)₃(C₆H₁₂O)B⁻), Phosphat (PO₄³⁻), Halogeno-Phosphat insbesondere Hexafluorophosphat (PF₆⁻), organische Phosphate insbesondere Alkylphosphate oder Arylphosphate (RO-PO₃⁻ mit R = Alkyl oder Aryl), Nitrat (NO₃⁻), Sulfat (SO₄²⁻), organische Sulfate insbesondere Alkylsulfate oder Arylsulfate (ROSO₃⁻ mit R = Alkyl oder Aryl), organische Sulfonate insbesondere Alkylsulfonate oder Arylsulfonate (R-SO₃⁻ mit R = Alkyl oder Aryl) ganz besonders Toluolsulfonyl (p-CH₃(C₆H₄)-SO₃⁻), Carboxylat (R-COO⁻ mit R =Alkyl), Methanid ([HCR⁸R⁹]⁻ und [CR⁸R⁹R¹⁰]⁻ mit R⁸, R⁹, R¹⁰ = CN, NO oder NO₂, wobei R⁸, R⁹, R¹⁰ gleich oder unterschiedlich sein können), Halogen insbesondere Fluorid (F⁻), Chlorid (Cl⁻) oder Bromid (Br⁻) oder Pseudohalogenid insbesondere Azid (N₃⁻), Cyanid (CN⁻), Cyanat (OCN⁻), Fulminat (R₂CNO⁻ mit R = Alkyl oder Aryl) oder Thiocyanat (SCN⁻) bedeutet und wobei insbesondere jede Alkylgruppe R der Anionen X^{m-} oder, falls zwei Alkylgruppen R vorgesehen sind, jede Alkylgruppe R der Anionen X ^{m-} gleich oder verschieden voneinander ein linearer, verzweigter, gesättigter und/ oder ungesättigter Alkylrest mit einer Kohlenstoffkettenlänge von C-1 bis C-30 bedeutet und weiterhin besonders bevorzugt ein Methyl-, Ethyl-, n-Propyl-, 1-Methylethyl-, n-Butyl-, 1-Methylpropyl-, 2-Methylpropyl-, 1,1-Dimethylethyl-, n-Pentyl-, 1-Methylbutyl-, 2-Methylbutyl-, 3-Methylbutyl-, 1-Ethylpropyl-, 2-Ethylpropyl-, 1,1-Dimethylpropyl-, 1,2-Dimethylpropyl-, 2,2-Dimethylpropyl-, n-Hexyl-, 2-Ethylhexyl-, n-Heptyl-, n-Octyl-, n-Nonyl-, n-Decyl-, n-Undecyl- oder n-Dodecyl-Rest bedeutet.

Es ist weiterhin bevorzugt, dass die ionische Flüssigkeit 1,3-Dialkylimidazolium-Kationen und ein hydrophiles oder hydrophobes Anion X, insbesondere ein-, zwei-oder dreiwertige Anionen X^{m-} mit m = 1, 2 oder3 gemäß Formel II umfasst, 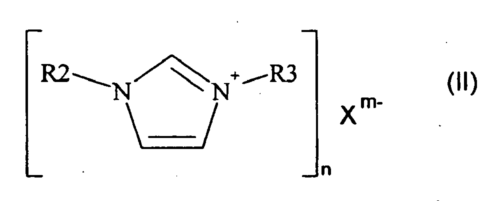
wobei n die Anzahl der einwertigen Kationen in dem Salz bedeutet und den Wert n= 1, 2 oder 3 aufweist und n der Wertigkeit des Anions entspricht,
wobei R2 und R3 unabhängig voneinander ein linearer, verzweigter, gesättigter und/ oder ungesättigter Alkylrest mit einer Kohlenstoffkettenlänge von C-1 bis C-30 bedeutet und
wobei X ^{m-} ein Anion aus der Gruppe Tetrafluoroborat (BF₄⁻), Alkyl-Borat (B(OR)₄⁻ mit R = Alkyl), Phosphat (PO₄³⁻), Halogeno-Phosphat (PY₆⁻mit Y = Halogen), Alkyl- oder Arylphosphat (RO-PO₃⁻ mit R = Alkyl oder Aryl), Nitrat (NO₃⁻), Sulfat (SO₄²⁻), Alkyl- oder Arylsulfate (RO-SO₃⁻ mit R = Alkyl oder Aryl), Alkyl- oder Arylsulfonate (R-SO₃⁻ mit R = Alkyl oder Aryl), Carboxylat (R-COO⁻ mit R =Alkyl), Methanid ([HCR⁸R⁹]⁻ und [CR⁸R⁹R¹⁰]⁻ mit R⁸, R⁹, R¹⁰ = CN, NO oder NO₂, wobei R⁸, R⁹, R¹⁰ gleich oder unterschiedlich sein können), Fluorid (F⁻), Chlorid (Cl⁻), Bromid (Br⁻), Azid (N₃⁻), Cyanid (CN⁻), Cyanat (OCN⁻), Fulminat (R₂CNO⁻ mit R = Alkyl oder Aryl) oder Thiocyanat (SCN⁻) bedeutet und
wobei jede Alkylgruppe R der Anionen X^{m-} oder, falls zwei Alkylgruppen R vorgesehen sind, jede Alkylgruppe R der Anionen X^{m-} gleich oder verschieden voneinander, ein linearer, verzweigter, gesättigter und/ oder ungesättigter Alkylrest mit einer Kohlenstoffkettenlänge von C-1 bis C-30 bedeutet.

Insbesondere kann auch bevorzugt sein, dass die ionische Flüssigkeit oder das Gemisch aus mindestens zwei ionischen Flüssigkeiten 1,3-Dialkylimidazolium-Kationen (Formel II, wobei R2, R3 unabhängig voneinander Alkyl bedeutet) und ein hydrophiles oder hydrophobes Anion X, insbesondere ein, zwei- oder dreiwertige Anionen X^{m-} mit m = 1, 2 oder 3 umfasst,
wobei Alkyl unabhängig voneinander ein linearer, verzweigter, gesättigter und/ oder ungesättigter Alkylrest mit einer Kohlenstoffkettenlänge von C-1 bis C-30 bedeutet und insbesondere Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1-Ethylpropyl, 2-Ethylpropyl, 1,1-Dimethylpropyl, 1,2-Dimethylpropyl, 2,2-Dimethylpropyl, n-Hexyl, 2-Ethylhexyl, n-Heptyl, n-Octyl, n-Nonyl, n-Decyl, n-Undecyl oder n-Dodecyl bedeutet und
wobei X^{m-} insbesondere ein Anion aus der Gruppe Tetrafluoroborat (BF₄⁻), Alkyl-Borat insbesondere Tetraalkylborat (B(OR)₄⁻ mit R = Alkyl) ganz besosonders Triethylhexylborat (C₂H₆O)₃(C₆H₁₂O)B⁻), Phosphat (PO₄³⁻), Halogeno-Phosphat insbesondere Hexafluorophosphat (PF₆⁻), organische Phosphate insbesondere Alkylphosphate oderArylphosphate (RO-PO₃⁻ mit R = Alkyl oder Aryl), Nitrat (NO₃⁻), Sulfat (SO₄²⁻), organische Sulfate insbesondere Alkylsulfate oder Arylsulfate (ROSO₃⁻ mit R = Alkyl oder Aryl), organische Sulfonate insbesondere Alkylsulfonate oder Arylsulfonate (R-SO₃⁻ mit R = Alkyl oder Aryl) ganz besonders Toluolsulfonyl (p-CH₃(C₆H₄)-SO₃⁻), Carboxylat (RCOO - mit R = Alkyl), Methanid ([HCR⁸R⁹]⁻ und [CR⁸R⁹R¹⁰]⁻ mit R⁸, R⁹, R¹⁰ = CN, NO oder NO₂, wobei R⁸, R⁹, R¹⁰ gleich oder unterschiedlich sein können), Halogen insbesondere Fluorid (F⁻), Chlorid (Cl⁻) oder Bromid (Br⁻) oder Pseudohalogenid insbesondere Azid (N₃⁻), Cyanid (CN⁻), Cyanat (OCN⁻), Fulminat (R₂CNO⁻ mit R = Alkyl oder Aryl) oder Thiocyanat (SCN⁻) bedeutet und wobei insbesondere jede Alkylgruppe R der Anionen X^{m-} oder, falls zwei Alkylgruppen R vorgesehen sind, jede Alkylgruppe R der Anionen X ^{m-} gleich oder verschieden voneinander ein linearer, verzweigter, gesättigter und/ oder ungesättigter Alkylrest mit einer Kohlenstoffkettenlänge von C-1 bis C-30 bedeutet und weiterhin besonders bevorzugt ein Methyl-, Ethyl-, n-Propyl-, 1-Methylethyl-, n-Butyl-, 1-Methylpropyl-, 2-Methylpropyl-, 1,1-Dimethylethyl-, n-Pentyl-, 1-Methylbutyl-, 2-Methylbutyl-, 3-Methylbutyl-, 1-Ethylpropyl-, 2-Ethylpropyl-, 1,1-Dimethylpropyl-, 1,2-Dimethylpropyl-, 2,2-Dimethylpropyl-, n-Hexyl-, 2-Ethylhexyl-, n-Heptyl-, n-Octyl-, n-Nony)-. n-Decyl-, n-Undecyl- oder n-Dodecyl-Rest bedeutet.

Gemäß einem ganz besonders bevorzugten Verfahren umfasst die ionische Flüssigkeit oder das Gemisch aus mindestens zwei ionischen Flüssigkeiten mindestens ein 1-Alkyl-3-methylimidazoliumhalogenid [Formel (II) wobei R3 = Methyl und R2 = Alkyl bedeutet], wobei Alkyl ein linearer oder verzweigter, gesättigter Kohlenwasserstoff mit einer Kohlenstoffkettenlänge von C-1 bis C-30 und insbesondere Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1-Ethylpropyl, 2-Ethylpropyl, 1,1-Dimethylpropyl, 1,2-Dimethylpropyl, 2,2-Dimethylpropyl, n-Hexyl, 2-Ethylhexyl, n-Heptyl, n-Octyl, n-Nonyl, n-Decyl, n-Undecyl oder n-Dodecyl bedeutet und wobei Halogenid Chlorid oder Bromid bedeutet.

Es gibt weitere Möglichkeiten von Anion-Kation-Kombinationen, die als ionische Flüssigkeit geeignet sein können. Insbesondere können durch systematische Kombination von Anionen und Kationen Salze ionische Flüssigkeiten als solvothermale Lösemittel-Phasen mit bestimmten Eigenschaften, wie zum Beispiel Schmelzpunkt und thermische Stabilität, hergestellt werden. In einer bevorzugten Variante der Erfindung stellt die ionische Flüssigkeit selbst eine Brönstedsäure bzw. deren Salz dar und dient somit als Protonen-/ Kationenquelle bzw. enthält eine Brönstedsäure bzw. deren Salze, die als Protonen/ Kationenquelle dienen.

Darüber hinaus kann weiter vorgesehen sein, das die ionische Flüssigkeit oder das Gemisch aus mindestens zwei ionischen Flüssigkeiten zusätzlich Promotorionen umfasst, wobei diese ausgewählt werden aus der Gruppe Phosphat (PO₄⁻), organische Phosphate (RO-PO₃⁻), Nitrat (NO₃⁻), Sulfat (SO₄²⁻), organische Sulfate (RO-SO₃⁻), Carboxylat (R-COO⁻), Methanid ([HCR⁸R⁹]⁻ oder [CR⁸R⁹R¹⁰]⁻ mit R⁸, R⁹, R¹⁰ = CN , NO oder NO₂, wobei R⁸, R⁹, R¹⁰ gleich oder unterschiedlich sein können), Fluorid (F⁻), Chlorid (Cl⁻), Bromid (Br⁻), Azid (N₃⁻), Cyanid (CN⁻), Cyanat (OCN⁻), Fulminat (R₂CNO⁻) oder Thiocyanat (SCN⁻) bedeutet. Insbesondere können die organischen Reste R ein Alkylrest sein. Diese Promotorionen können als Additive einer ionischen Flüssigkeit in jeder Form, d.h. unabhängig von einem zugehörigen Gegenion zugegeben werden.

In ionischen Flüssigkeiten können anorganische Synthesen und insbesondere Silikatsynthesen unter relativ milden Bedingungen durchgeführt werden, die zur gezielten Synthese von Silikaten mit definierten Struktureinheiten führen. Einerseits kann die Synthese bei Temperaturen durchgeführt werden, die unterhalb einem bestimmten Wert liegt, insbesondere kann die Synthese bei einer Temperatur unterhalb von 250 °C, insbesondere unterhalb von 200 °C und ganz besonders bevorzugt zwischen 50 °C und 150 °C durchgeführt werden. Andererseits kann die Synthese in einer wasserfreien oder in kontrolliert wasserhaltigen Umgebung durchgeführt werden. In einem besonders bevorzugten Verfahren wird die Synthese in einem kontrolliert wasserhaltigen Umgebung durchgeführt, wobei die Menge an Wasser höchsten dem der doppelten Menge an stöchiometrischen Anteilen Wasser bezogen auf die für die Synthese der jeweiligen Silikate notwendige Menge beträgt. In einem solchen Reaktionsmedium werden Nebenreaktionen, die in einer hydrothermalen Synthese systembedingt ablaufen, fast vollständig unterdrückt, wodurch eine nahezu optimale Reaktionsbedingung für eine gezielte Synthese zur Verfügung gestellt wird. Demnach wird in einem bevorzugten erfindungsgemäßen Verfahren die Synthese der Silikate bei höchstens 150 °C und insbesondere 50 °C bis 150 °C und ganz besonders in einem Autoklaven bei 50 °C bis 150 °C durchgeführt. Insbesondere wird die Synthese der Silikate in einem Autoklaven bei 50 °C bis 150 °C und mit einer in Bezug auf das zu synthetisierende Silikat höchstens doppeltstöchiometrischen Menge an Wasser durchgeführt. Bei dem Autoklaven handelt es sich um ein geschlossenes Gefäß, das während der gesamten Reaktionszeit verschlossen bleibt, so das der mit der eingestellten Temperatur aufgebaute Gesamtdruck aufrecht erhalten ist. Somit werden die solvothermalen Bedingungen in sehr einfacher Art und Weise eingestellt. Durch die Verwendung von ionischen Flüssigkeiten als Solvens und der kontrollierten Menge an Wasser kann auf die bei der hydrothermalen Synthese notwendigen Hochdruckautoklaven verzichtet werden.

Weiterhin kann vorgesehen sein, dass die solvothermale Synthese in einem Autoklavensystem mit Zwangsumwälzung durchgeführt wird. Diese Zwangsumwälzung stellt eine laminare Strömung auf der metallischen Trägersubstratoberfläche bereit. Hierdurch wird die Oberfläche mit einer besonders gleichmäßigen Konzentration an synthetisierten Silikaten versorgt beziehungsweise durch die mit der laminaren Strömung eingestellte gleichmäßige Konzentration an gelösten Komponenten erfolgt ein sehr gleichmäßiges Wachstum an Silikaten auf der Metalloberfläche. Dies stellt einen wesentlichen Unterschied zur klassischen Hydrothermalsynthese dar, bei der lediglich ein Stofftransport durch Konvektion im Schwerefeld sichergestellt ist, die allenthalben durch interne Rührvorrichtung unterstützt ist, die ihrerseits nicht zu einer laminaren Strömung auf der Substratoberfläche führt. Erfindungsgemäß Verfahren zur Verfügung, in dem die Verfahrenschritte b) und c) gleichzeitig ausgeführt werden können. In einem besonders bevorzugten Verfahren erfolgt die Synthese der Silikate nach Verfahrensschritt b) und die Beschichtung nach

Verfahrensschritt c) in einem Mehrkammerautoklaven, . Dabei ist unter einem Mehrkammerautoklaven, ein solches Druckgefäß zu verstehen, das aus mindestens zwei Kompartimenten besteht, wobei jedes Kompartiment zu den übrigen Kompartimenten isotherm ist. In einem ersten Kompartiment wird dabei das metallische Trägersubstrat eingebracht, wogegen in dem mindestens zweiten Kompartiment eine Zwangsumwälzung erfolgt, wodurch eine laminare Strömung an der Oberfläche des metallischen Trägersubstrates erzeugt wird. Somit kann ein durch die ionische Flüssigkeit bedingte schnelle Keimbildung an jeder Stelle in der ionischen Flüssigkeit vollzogen werden und diese Keime in sehr gleichmäßiger Konzentration auf die metallische Oberfläche aufgebracht werden und/ oder ein sehr homogene Keimbildung auf der metallischen Oberfläche erfolgen. Diese homogene Keimbildung in der ionischen Flüssigkeit und/ oder auf der metallischen Oberfläche des Trägersubstrates bewirkt ein Aufwachsen von homogenen Silikatschichten auf der metallischen Oberfläche.

Bei der Herstellung der Partikel, Kristalle oder den daraus bestehenden oder sich in-situ bildenden Schichten können die inischen Flüssigkeiten weiterhin als stabilisierendes Agens auf der Oberfläche der sich bildenden Teilchen wirken. Anionische oder kationische konstituierende Bestandteile können dabei die Rolle von Stabilisatoren übernehemen, die in der klassischen Systemen als molekulare Additive zugesetzt werden. Auf diese Weise können solvothermale Systeme aufgebaut werden, die das Eigenschafts- und Anwendungsspektrum klassischer wasserbasierter Systeme wesentlich erweitert.

Mit dem hier vorgeschlagen Verfahren kann ein Schichtverbund hergestellt werden, dessen Silikatschicht sehr homogen hinsichtlich seiner Schichtdicke an jeder Stelle des Schichtverbundes ist und darüber hinaus sehr homogen hinsichtlich der Einzelpartikel, aus denen die Silikatschicht besteht. Durch die im Vergleich zur klassischen Hydrothermalsynthese schnellere Keimbildung, wird die Keimbildung im Vergleich zum Partikel- oder Kristallwachstum begünstigt. Damit resultieren aus dem vorgeschlagenen Verfahren Partikel beziehungsweise Kristalle und Schichten, die eine sehr enge Partikelgrößenverteilung aufweisen. Diese enge Größenverteilung wiederum gewährleistet eine in sich homogene Silikatschicht auf dem metallischen Trägersubstrat. Eine in sich zusammenhaltende Silikatschicht wird dabei dadurch erreicht, dass neu gebildete Keime auf bereits bestehende Keime auf dem metallischen Trägersubstrat aufwachsen.

Demnach kann in einem bevorzugten Verfahren eine insbesondere homogene Silikatschicht eine Schichtdicke von mindestens 10 µm, insbesondere 10 µm und höchstens 200 µm und ganz besonders bevorzugt mindestens 50 µm und höchstens 150 µm aufweisen. In einem weiterhin bevorzugten Verfahren weist die Silikatschicht Partikel oder Kristalle auf, die einen Partikeldurchmesser von höchstens 200 nm, insbesondere 10 bis 150 nm aufweisen.

Entsprechend den klassischen Synthese-Verfahren von Silikaten und insbesondere von Zeolithen werden die zur Ausbildung der Silikat-Struktur beziehungsweise Zeolith-Struktur notwendigen Ausgangsstoffe in eine wässrige Lösung oder Suspension gebracht. Eine solche wässrige Suspension umfasst eine erste Komponente, welche eine Quelle für Kationen aus der ersten oder zweiten Hauptgruppe des Periodensystems darstellt und Wasser. Ferner liegt eine zweite Komponente vor, welche als Quelle für wenigstens ein netzbildendes Element aus der dritten, vierten oder fünften Hauptgruppe des Periodensystems dient. Die Wassermenge in der Lösung oder Suspension wird dabei derart gewählt, dass eine dem zu synthetisierenden Silikat entsprechende höchstens doppelt-stöchiometrische Menge vorliegt. Erfindungsgemäß liegt zusätzlich eine ionische Flüssigkeit von, in der die solvothermale Synthese ausgeführt wird. Insbesondere kann mit dem vorliegenden neuen verfahren eine Synthese von Aluminiumsilikaten und insbesondere von Zeolithen der allgemeinen Formel (VII)

M₂/_{z}O · Al₂O₃ · x SiO₂ · yH₂O (VII)

durchgeführt werden,
wobei
- M :: ein oder mehr als ein Kation aus der Gruppe der Alkali- oder Erdalkalielemente, Wasserstoff und/oder Ammonium,
- z :: die Wertigkeit des Kations oder die Summe der Wertigkeiten der Kationen,
- x :: 1,8 bis 12 und
- y :: 0 bis 8 bedeutet.

Die weiteren Synthesebedingungen zur Herstellung von dauerhaften SilikatSchichten beziehungsweise Zeolith-Schichten auf den metallischen Trägersubstraten können im Rahmen des fachmännischen Ermessens entsprechend der klassischen Silikatsynthese gewählt werden. Als metallische Trägersubstrate sollen dabei insbesondere metallische Substrat aus Kupfer, Aluminium, Eisen oder Legierungen hiervon oder Edelstahl gewählt werden.

Mittels des erfindunsgemäßen Verfahrens kann ein Schictverbund insbesondere für einen Wärmetauscher hergestellt werden. . Diese Schichtverbunde zeichnen sich besonders durch eine effektive Energieübertragung in einem Wärmetauscher aus, wobei der Wärmetauscher bevoreugt ein metallisches Trägersubstrat und eine Silikatschicht umfasst, die ihrerseits Silikatpartikel oder Silikatkristalle umfasst, die eine Teilchengröße von höchstens 200 nm, insbesondere höchstens 150 nm und ganz besonders bevorzugt eine Teilchengröße von 50 bis 150 nm aufweisen.

## Patentansprüche

1. Verfahren zur Herstellung eines Schichtverbundes umfassend ein metallisches Trägersubstrat und eine Silikatschicht mit den Verfahrensschritten
a) Bereitstellen des metallischen Trägersubstrates,
b) Herstellen von Silikatkrlstallen und/ oder Silikatpartikeln mittels solvothermaler Synthese und
c) Beschichten mindestens einer Oberfläche des metallischen Trägersubstrates mit den unter b) hergestellten Silikatkristallen und/ oder Silikatpartikel
**dadurch gekennzeichnet, dass**
die solvothermale Synthese in mindestens einer ionischen Flüssigkeit durchgeführt wird, und das die Verfahrensschritte b) und c) gleichzeitig vorgenommen werden.

2. Verfahren nach Anspruch 1 **dadurch gekennzeichnet, dass** die Synthese in einem Gemisch aus mindestens zwei verschiedenen ionischen Flüssigkeiten durchgeführt wird.

3. Verfahren nach Anspruch 1 oder 2 **dadurch gekennzeichnet, dass** die ionische Flüssigkeit 1,3-Dialkylimidazolium-Kationen und hydrophile oder hydrophobe Anionen X, insbesondere ein-, zwei- oder dreiwertige Anionen X^{m-} mit m= 1, 2 oder 3 umfasst, wobei Alkyl unabhängig voneinander ein linearer, verzweigter, gesättigter und/ oder ungesättigter Alkylrest mit einer Kohlenstoffkettenlänge von C-1 bis C-30 bedeutet.

4. Verfahren nach mindestens einem der vorgenannten Ansprüche **dadurch gekennzeichnet, dass** die ionische Flüssigkeit mindestens ein 1-Alkyl-3-methylimidazoliumhalogenid umfasst, wobei Alkyl ein linearer oder verzweigter und/ oder gesättigter oder ungesättigter Kohlenwasserstoff mit einer Kohlenstoffkettenlänge von C-1 bis C-30 und wobei Halogenid Chlorid oder Bromid bedeutet.

5. Verfahren nach mindestens einem der vorgenannten Ansprüche **dadurch gekennzeichnet, dass** die ionische Flüssigkeit weiterhin Promotorionen umfasst, die verschieden von den Anionen der ionischen Flüssigkeiten sind und diese Promotorionen ausgewählt werden aus der Gruppe Phosphat
(PO₄³⁻), organische Phosphate (RO-PO₃⁻), Nitrat (NO₃⁻), Sulfat (SO₄²⁻), organische Sulfate (RO-SO₃⁻), Carboxylat (R-COO⁻), Methanid ([HCR⁸R⁹] und [CR⁸R⁹R¹⁰]⁻mit R⁸, R⁹, R¹⁰ = CN , NO oder NO₂, wobei R³, R⁹, R¹⁰ gleich oder unterschiedlich sein können), Fluorid (F⁻), Chlorid (Cl⁻), Bromid (Br⁻), Azid (N₃⁻). Cyanid (CN⁻), Cyanat (OCN⁻), Fulminat (R₂CNO⁻) oder Thiocyanat (SCN⁻) bedeutet.

6. Verfahren nach Anspruch 1 oder 2 **dadurch gekennzeichnet, dass** die Synthese der Silikatkristalle und/ oder Silikatpartikel bei höchstens 150 °C in einem Autoklaven durchgeführt wird, insbesondere in Gestalt einer Solvothermalsynthese in einem Autoklaven mit Zwangsumwälzung.

7. Verfahren nach mindestens einem der vorgenannten Ansprüche **dadurch gekennzeichnet, dass** das metallische Substrat aus Kupfer, Aluminium, Eisen oder Legierungen hiervon oder Edelstahl besteht.

8. Verfahren nach mindestens einem der vorgenannten Ansprüche **dadurch gekennzeichnet, dass** die Silikatschicht aus einem Aluminium-Silikat vorzugsweise ein Zeolith der allgemeinen Formel
M₂/_{z}O · Al₂O₃ · xSiO₂ · yH₂O besteht,
wobei
M ; ein oder mehr als ein Kation aus der
Gruppe der Alkali- oder Erdalkalielemerite, Wasserstoff und/oder Ammonium,
z : die Wertigkeit des Kations oder die Summe der Wertigkeiten
der Kationen,
x : 1,8 bis 12 und
y : 0 bis 8 bedeutet.

9. Verfahren nach mindestens einem der vorgenannten Ansprüche **dadurch gekennzeichnet, dass** die Silikatschicht Silikatkristalle und/ oder Silikatpartikel umfasst, die einen Partikeldurchmesser von höchstens 200 nm und insbesondere 10 bis 150 nm aufweisen.

10. Verfahren nach mindestens einem der vorgenannten Ansprüche **dadurch gekennzeichnet, dass** die Silikatschicht eine Schichtdicke von mindestens 10 µm, insbesondere von mindestens 10 µm und höchstens 200 µm und ganz besonders bevorzugt mindestens 50 µm und höchstens 150 µm aufweist,

## Claims

1. A method of manufacture of a layer composite comprising a metal support substrate and a silicate layer with the following steps
a) Preparation of the metal support substrate
b) Production of silicate crystals and/or silicate particles by means of solvothermal synthesis and
c) coating of at least one surface of the metal support substrate with the silicate crystals and/or silicate particles produced in step b), **characterised in that**
the solvothermal synthesis is carried out in at least one ionic fluid, and that the method steps b) and c) are performed simultaneously.

2. The method according to claim 1, **characterised in that** the synthesis is carried out in a mixture of at least two different ionic fluids.

3. The method according to claim 1 or 2, **characterised in that** the ionic fluid includes 1,3-dialkylimidazolium cations as well as hydrophilic or hydrophobic anions X, in particular mono-, bi- or trivalent anions X^{m-} with m= 1, 2 or 3, whereas alkyl means independently from one another a linear, branched, saturated and/ or unsaturated alkyl residue having a carbon chain length of C-1 to C-30.

4. The method according to at least one of the aforementioned claims **characterised in that** the ionic fluid contains at least one 1-alkyl-3-methylimidazolium halogenide whereby alkyl can be a linear or branched and/ or saturated or unsaturated hydrocarbon having a carbon chain length of C-1 to C-30 and whereas halogenide means chloride or bromide.

5. The method according to at least one of the aforementioned claims **characterised in that** the ionic fluid moreover contains promoter ions which are different from the anions of the ionic fluids and these promoter ions are selected from the group composed of phosphate (PO₄³⁻), organic phosphates (RO-PO₃⁻), nitrate (NO₃⁻), sulfate (SO₄²⁻), organic sulfates (RO-SO₃⁻), carboxylate (R-COO⁻), methanide ([HCR⁸R⁹] - and [CR⁸R⁹R¹⁰]⁻ with R⁸, R⁹, R¹⁰ = CN , NO or NO₂, whereas R⁸, R⁹, R¹⁰ may be identical or different), fluoride (F⁻), chloride (Cl⁻), bromide (Br⁻), triacid (N₃⁻), cyanide (CN ⁻), cyanate (OCN ⁻), fulminate (R₂CNO⁻) or thiocyanate (SCN⁻).

6. The method according to claim 1 or 2, **characterised in that** the synthesis of the silicate crystals and/or silicate particles is carried out in an autoclave at most at 150°C, in particular in the form of a solvothermal synthesis in an autoclave with forced air circulation.

7. The method according to at least one of the aforementioned claims **characterised in that** the metal substrate consists of copper, aluminium, iron or alloys thereof or stainless steel.

8. The method according to at least one of the aforementioned claims **characterised in that** the silicate layer consists of an aluminium silicate, preferably a zeolite of the general formula
M_{2/z}O · Al₂O₃ · xSiO₂ · yH₂O, whereas
M: is one or more than one cation from the group of the alkaline or alkaline earth elements, hydrogen and/or ammonium,
z: is the valence of the cation or the sum of the valences of the cations,
x: 1.8 to 12 and
y: 0 to 8.

9. The method according to at least one of the aforementioned claims **characterised in that** the silicate layer contains silicate crystals and/or silicate particles which comprise a particle diameter of at most 200 nm and in particular 10 to 150 nm.

10. The method according to at least one of the aforementioned claims **characterised in that** the silicate layer comprises a layer thickness of at least 10 µm, in particular of at least 10 µm and at most 200 µm and most particularly preferably at least 50 µm and at most 150 µm.

## Revendications

1. Procédé de fabrication d'un composite en couches comprenant un substrat porteur de métal et une couche de silicate avec les étapes de procédé suivantes
a) Préparation d'un substrat porteur de métal
b) Fabrication des cristaux de silicate et/ou particules de silicate par synthèse solvothermale et
c) Enduction au moins d'une surface du substrat porteur de métal avec les cristaux de silicate et/ou les particules de silicate fabriqués au paragraphe b),
**caractérisé en ce que**
la synthèse solvothermale se produit dans au moins un fluide ionique et que les étapes de procédé b) et c) sont réalisées de manière simultanée.

2. Procédé selon la revendication 1 **caractérisé en ce que** la synthèse se produit dans un mélange d'au moins deux fluides ioniques différents.

3. Procédé selon la revendication 1 **caractérisé en ce que** le fluide ionique comprend des cations de 1,3-dialkylimidazolium de même que des anions X hydrophiles ou hydrophobes, en particulier des anions mono-, bi- ou trivalents X^{m-} avec m= 1, 2 ou 3, dans lequel l'alkyle signifie indépendamment l'un de l'autre un résidu alcalin linéaire, ramifié, saturé et/ou insaturé avec une longueur de chaîne de carbone de C-1 à C-30.

4. Procédé conforme à au moins l'une des revendications précitées, **caractérisé en ce que** le fluide ionique comprend au moins un halogénure de 1-alkyl-3-méthylimidazolium, dans lequel l'alkyle est un hydrocarbure linéaire ou ramifié et/ou saturé ou insaturé avec une longueur de chaîne de carbone de C-1 à C-30 et dans lequel halogénure signifie chlorure ou bromure.

5. Procédé conforme à au moins l'une des revendications précitées, **caractérisé en ce que** le fluide ionique comprend en outre des ions promoteurs, qui sont différents des anions du fluide ionique et ces ions promoteurs sont sélectionnés parmi le groupe composé de phosphate (PO₄³⁻), phosphates organiques (RO-PO₃⁻), nitrate (NO₃⁻), sulfate (SO₄²⁻), sulfates organiques (RO-SO₃⁻), carboxylate (R-COO⁻), méthanure ([HCR⁸R⁹]⁻ et [CR⁸R⁹R¹⁰]⁻ avec R⁸, R⁹, R¹⁰ = CN , NO ou NO₂, alors que R⁸, R⁹, R¹⁰ peuvent être identiques ou différents), fluorure (F), chlorure (CI⁻), bromure (Br⁻), triacide (N₃⁻), cyanure (CN⁻), cyanate (OCN⁻), fulminate (R₂CNO⁻) ou thiocyanate (SCN⁻).

6. Procédé selon la revendication 1 ou 2 **caractérisé en ce que** la synthèse des cristaux de silicate et/ou des particules de silicate se produit dans un autoclave à 150°C au maximum, en particulier sous forme de synthèse solvothermale dans un autoclave avec circulation d'air forcée.

7. Procédé conforme à au moins l'une des revendications précitées, **caractérisé en ce que** le substrat de métal se compose de cuivre, aluminium, fer ou alliages de ceux-ci ou acier inoxydable.

8. Procédé conforme à au moins l'une des revendications précitées, **caractérisé en ce que** la couche de silicate se compose d'un silicate d'aluminium, de préférence un zéolite de la formule générale M_{2/z}O · Al₂O₃ · xSiO₂ · y H₂O, où
M : un ou plusieurs cation pris dans le groupe des éléments alcalins ou de terre alcaline, hydrogène et/ou ammonium ,
z : valence du cation ou somme des valencesdes cations
x : 1,8 à 12
y: 0 à 8.

9. Procédé conforme à au moins l'une des revendications précitées, **caractérisé en ce que** la couche de silicate comprend des cristaux de silicate et/ou des particules de silicate présentant un diamètre de particule de 200 nm au maximum et en particulier de 10 à 150 nm.

10. Procédé conforme à au moins l'une des revendications précitées, **caractérisé en ce que** la couche de silicate présente une épaisseur de couche d'au moins 10 µm, en particulier d'au moins 10 µm et au maximum 200 µm et de préférence toute particulière au moins 50 µm et au maximum 150 µm.
